# EUROPEAN PATENT APPLICATION

(11) **EP 4 418 389 A1**
(43) Date of publication of application: **21.08.2024**
(21) Application number: 24156021.8
(22) Date of filing: 06.02.2024
(51) Int. Cl.: H01M 10/04, H01M 10/0585, H01M 50/474, H01M 50/477, H01M 50/486

(54) **METHOD FOR PRODUCING ENERGY STORAGE MODULE AND ENERGY STORAGE MODULE**

(30) Priority: 16.02.2023 JP 2023022343
(71) Applicant: TOYOTA JIDOSHA KABUSHIKI KAISHA, Toyota-shi, Aichi-ken, 471-8571 (JP)
(72) Inventor: MARUYAMA, Kouta, Aichi-ken, 471-8571 (JP); FUJIOKA, Naoki, Aichi-ken, 471-8571 (JP); FURUMURA, Yoshitaka, Aichi-ken, 471-8571 (JP)
(74) Representative: D Young & Co LLP

(57) **Abstract**

A main object of the present disclosure is to provide a method for producing a storage module with excellent sealability. The present disclosure achieves the object by providing the method including: a preparing step of preparing a layered body, in which a plurality of electrode sheet that includes : an electrode including a current collector and an active material layer; and a frame body made of a resin arranged along an outer periphery of the electrode, is layered in a first direction; an arranging step of arranging a pair of restraining member of which heat conductivity is 1 W/m·K or less, in a position overlapping with the frame body in the layered body when viewed from the first direction; and a heating step of heating the frame body in the layered body and the pair of restraining member while applying a restraining pressure to the layered body by the pair of restraining member, and thereby welding the frame body adjacent to each other in the first direction to form a seal part.

## Description

### Technical Field

The present disclosure relates to a method for producing storage module, and a storage module.

### Background Art

In a method for producing a storage module of batteries such as a secondary battery, a technique of sealing a layered body by heating a side surface of the layered body, in which a plurality of electrode sheet is layered, has been known. For example, Patent Literature 1 discloses a method for producing a storage module, the method comprising: a layering step of layering a plurality of bipolar electrode unit, in which a surrounding part of each electrode plate of the plurality of bipolar electrode is connected to a frame body, interposing a separator; and a heat welding step of heat welding seal end surfaces configured by a surrounding end surface of the frame body adjacent to each other in a layering direction of the layered body.

### Citation List

### Patent Literature

Patent Literature 1: Japanese Patent Application Laid-Open (JP-A) No. 2018-174079

### Summary of Disclosure

### Technical Problem

On the occasion of heating the side surface of the layered body in which a plurality of electrode sheet is layered, it is presumed that a restraining pressure is applied to the layered body using a pair of restraining member in order to minimize the thickness of the layered body as thin as possible from the view point of volume energy density. For example, when the material of the restraining member is a metal material, since the metal material has high heat conductivity, when the side surface of the layered body is heated, a part of the heat applied to the side surface of the layered body is conducted to the restraining member side, and sealability tends to be insufficient.

The present disclosure has been made in view of the above circumstances and a main object was thereof is to provide a method for producing a storage module with excellent sealability.

### Solution to Problem

[1] A method for producing a storage module, the method comprising:
   a preparing step of preparing a layered body, in which a plurality of electrode sheet that includes: an electrode including a current collector and an active material layer; and a frame body made of a resin arranged along an outer periphery of the electrode, is layered in a first direction;
   an arranging step of arranging a pair of restraining member of which heat conductivity is 1 W/m·K or less, in a position overlapping with the frame body in the layered body when viewed from the first direction; and
   a heating step of heating the frame body in the layered body and the pair of restraining member while applying a restraining pressure to the layered body by the pair of restraining member, and thereby welding the frame body adjacent to each other in the first direction to form a seal part.
[2] The method for producing a storage module according to [1], wherein a heat resistant temperature of the restraining member is 200°C or more.
[3] The method for producing a storage module according to [1] or [2], wherein the heat conductivity of the restraining member is 0.1 W/m·K or less.
[4] The method for producing a storage module according to any one of [1] to [3], wherein a material of the restraining member is an inorganic material.
[5] The method for producing a storage module according to any one of [1] to [3], wherein a material of the restraining member is a resin.
[6] The method for producing a storage module according to any one of [1] to [5], wherein, in the heating step, the seal part in the layered body and the pair of restraining member are heated by a radiation superheater.
[7] The method for producing a storage module according to [6], wherein the radiation superheater is an infrared lamp heater.
[8] The method for producing a storage module according to any one of [1] to [7], wherein a shape of the layered body viewed from the first direction is a square, and a length of each side configuring the square is 30 cm or more.
[9] A storage module comprising:
   an electrode body in which a plurality of electrode including a current collector and an active material layer is layered in a first direction; and
   a seal part made of a resin arranged along an outer periphery of the electrode body, wherein
   in a second direction orthogonal to the first direction, when A designates a length of the seal part extending from a side surface of the seal part to the electrode side, A₁ designates a length of the seal part in one end of the seal part in the first direction, A₂ designates a length of the seal part in the other end of the seal part in the first direction, and A₃ designates a length of the seal part in a center of the seal part in the first direction, the A₁ and the A₂ are larger than the A₃.

### Advantageous Effects of Disclosure

The method for producing a storage module in the present disclosure exhibits an effect such that a storage module with excellent sealability is obtained.

### Brief Description of Drawings

FIG. 1 is a schematic cross-sectional view exemplifying the layered body in the present disclosure.
FIG. 2 is an exploded view of the layered body in FIG. 1.
FIG. 3 is a schematic cross-sectional view exemplifying the arranging step and the heating step in the present disclosure.
FIGS. 4A and 4B are schematic cross-sectional views explaining the effect in the present disclosure.
FIG. 5 is a schematic plan view exemplifying the layered body in the present disclosure.
FIG. 6 is a schematic cross-sectional view exemplifying the arranging step in the present disclosure.
FIG. 7 is a schematic plan view exemplifying the heating step in the present disclosure.
FIG. 8 is a schematic cross-sectional view exemplifying the storage module in the present disclosure.

### Description of Embodiments

The embodiments in the present disclosure will be hereinafter explained in details with reference to drawings. Each drawing described as below is a schematic view, and the size and the shape of each portion are appropriately exaggerated in order to be understood easily. Furthermore, in the present description, upon expressing an embodiment of arranging one member with respect to the other member, when it is expressed simply "on" or "below", both of when the other member is directly arranged on or below the one member so as to contact with each other, and when the other member is arranged above or below the one member interposing an additional member, can be included unless otherwise described.

### A. Method for producing storage module

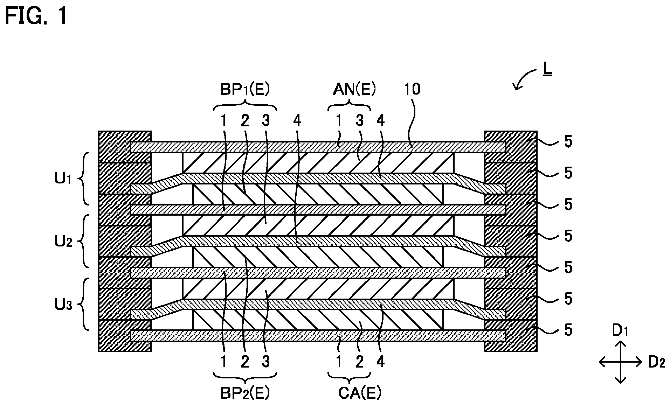

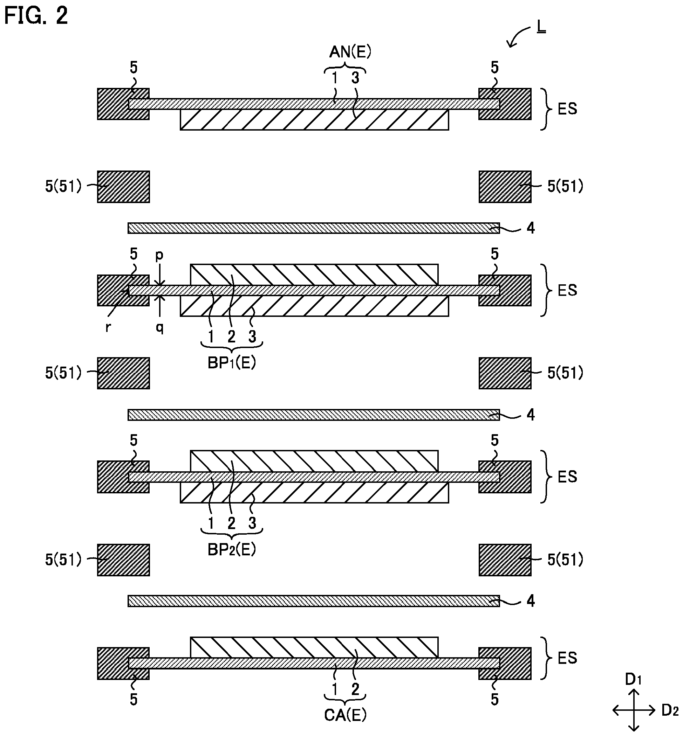

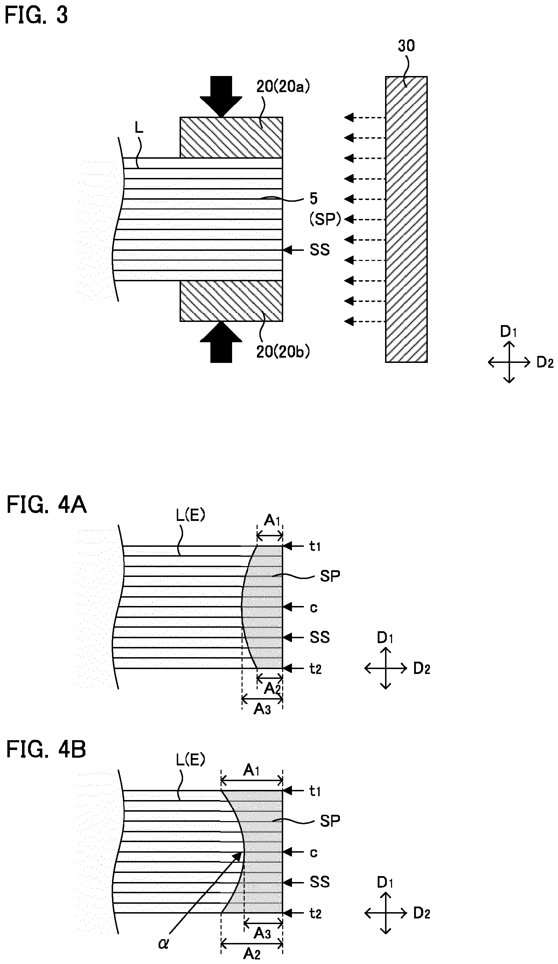

FIG. 1 is a schematic cross-sectional view exemplifying the layered body in the present disclosure, and FIG. 2 is an exploded view of the layered body shown in FIG. 1. Also, FIG. 3 is a schematic cross-sectional view exemplifying the arranging step and the heating step in the present disclosure.

As shown in FIG. 1 and FIG. 2, in the present disclosure, first, layered body L is prepared (preparing step). As shown in FIG. 2, the layered body L includes a structure in which a plurality of electrode sheet ES is layered in a first direction D₁. The electrode sheet ES is provided with electrode E that includes current collector 1, and active material layers (cathode active material layer 2, anode active material layer 3) arranged on the current collector 1. The layered body L shown in FIG. 2 includes, as the electrode sheet ES, (i) an electrode sheet including bipolar electrode BP as the electrode E, (ii) an electrode sheet including cathode side end electrode CA as the electrode E, and (iii) an electrode sheet including anode side end electrode AN as the electrode E. Also, as shown in FIG. 2, the electrode sheet ES includes frame body 5 made of a resin arranged along an outer periphery of the electrode E (current collector 1).

As shown in FIG. 3, a pair of restraining member 20 (20a, 20b) is arranged in a position overlapping with the frame body 5 in the layered body L when viewed from the first direction D₁ (arranging step). The present disclosure features a characteristic that the heat conductivity of the restraining member 20 is low. Next, the frame body 5 in the layered body L and the pair of restraining member 20 are heated using radiation superheater 30 while applying a restraining pressure to the layered body L by the pair of restraining member 20, and thereby the frame body 5 adjacent to each other in the first direction D₁ is welded to form seal part SP.

In the present disclosure, by using the restraining member with low heat conductivity and heating the frame body and the restraining member, a storage module with excellent sealability is obtained. As described above, on the occasion of heating the side surface of the layered body in which a plurality of electrode sheet is layered, it is presumed that a restraining pressure is applied to the layered body using a pair of restraining member in order to minimize the thickness of the layered body as thin as possible from the view point of volume energy density. By applying the restraining pressure to the layered body, the frame body adjacent to each other in the first direction is crushed, and thus the thickness of the layered body can be reduced.

For example, when the material of the restraining member is a metal material, since the metal material has high heat conductivity, when the side surface of the layered body is heated, a part of the heat applied to the side surface of the layered body is conducted to the restraining member side, and sealability tends to be insufficient. Here, as shown in FIG. 4A, A designates a length of the seal part SP that extends from side surface SS of the seal part SP to the electrode E side, in a second direction D₂ orthogonal to the first direction D₁. Also, A₁ designates a length of the seal part SP in one end t₁ of the seal part SP in the first direction D₁, A₂ designates a length of the seal part SP in the other end t₂ of the seal part SP in the first direction D₁, and A₃ designates a length of the seal part SP in center c of the seal part SP in the first direction D₁. As shown in FIG. 4A, when the material of the restraining member is a metal material, since the metal material has high heat conductivity, a part of the heat applied to the side surface SS of the layered body L is conducted to the restraining member side. As a result, the A₁ and the A₂ will be smaller than the A₃, and the sealability in the end t₁ and the end t₂ tends to be insufficient.

In contrast, in the present disclosure, the restraining member with low heat conductivity is used and the frame body and the restraining member are heated. Thereby, a part of the heat applied to the side surface of the layered body is prevented from conducting to the restraining member side, and a storage module with excellent sealability is obtained. Also, by adjusting heating conditions (such as by increasing the heating temperature and heating time), a part of the heat applied to the side surface of the restraining member can be conducted to the layered body side. Thereby, as shown in FIG. 4B for example, the A₁ and the A₂ can be made larger than the A₃. Since the end t₁ and the end t₂ are positions to which stress from outside is easily applied, by increasing the sealability of them, a storage module with excellent durability is obtained.

### 1. Preparing step

The preparing step in the present disclosure is a step of preparing a layered body, in which a plurality of electrode sheet that includes: an electrode including a current collector and an active material layer; and a frame body made of a resin arranged along an outer periphery of the electrode, is layered in a first direction.

### (1) Electrode sheet

The electrode sheet includes: an electrode including a current collector and an active material layer; and a frame body made of a resin arranged along an outer periphery of the electrode. The electrode includes at least a current collector, and an active material layer formed on one surface of the current collector. The active material layer may be a cathode active material layer and may be an anode active material layer. Also, the electrode may include an active material layer respectively on both surfaces of the current collector.

As shown in FIG. 2, the electrode sheet ES may include, as the electrode E, a bipolar electrode including current collector 1, a cathode active material layer 2 arranged on one surface of the current collector 1, and an anode active material layer 3 arranged on the other surface of the current collector 1. Also, although not illustrated, the electrode sheet may include an electrode in which a cathode active material layer is respectively arranged on both surfaces of the current collector, and may include an electrode in which an anode active material layer is respectively arranged on both surfaces of the current collector, as the electrode.

As shown in FIG. 2, the electrode sheet ES may include, as the electrode E, cathode side end electrode CA including current collector 1, and cathode active material layer 2 arranged on one surface of the current collector 1. Also, the electrode sheet ES may include, as the electrode E, anode side end electrode AN including current collector 1, and anode active material layer 3 arranged on one surface of the current collector 1.

As shown in FIG. 2, the electrode sheet ES includes frame body 5 made of a resin arranged along an outer periphery of the electrode E. The resin used in the frame body 5 is, for example, a thermoplastic resin. Examples of the thermoplastic resin may include a polyolefin-based resin such as polyethylene and polypropylene. When the electrode sheet ES is viewed from the first direction D₁, the frame body 5 is usually arranged along with an entire outer periphery of the electrode E (current collector 1). The frame body 5 is used to form a seal part described later, and leakage of a liquid electrolyte is prevented by the seal part. For example, when the shape of the outer periphery of the electrode E (current collector 1) is a square, the frame body 5 is arranged along with the entire outer periphery of that square. Also, as shown in FIG. 2, the frame body 5 preferably covers a part of one main surface p of the current collector 1, a part of the other main surface q of the current collector 1, and the whole of side surface r configuring the outer periphery of the current collector 1.

### (2) Layered body

As shown in FIG. 1 and FIG. 2, the layered body L includes a plurality of electrode sheet ES layered in the first direction D₁. Also, as shown in FIG. 1, the layered body L may include a plurality of power generating unit U (U₁, U₂, U₃) layered in the first direction D₁. The power generating unit is typically a unit that includes a cathode active material layer, a separator and an anode active material. As described later, when a liquid electrolyte is supplied to the power generating unit, it works as a battery. As shown in FIG. 1, the plurality of power generating unit U (U₁, U₂, U₃) may be connected to each other in series. Also, although not illustrated in particular, the plurality of power generating units may be connected to each other in parallel.

In FIG. 1, the power generating unit U₁ includes cathode active material layer 2 in the bipolar electrode BP₁, anode active material layer 3 in the anode side end electrode AN, and separator 4 arranged between those. Also, the power generating unit U₂ includes cathode active material layer 2 in the bipolar electrode BP₂, anode active material layer 3 in the bipolar electrode BP₁, and separator 4 arranged between those. In this manner, one power generating unit may be configured by two bipolar electrodes adjacent to each other. Also, the power generating unit U₃ includes cathode active material layer 2 in the cathode side end electrode CA, anode active material layer 3 in the bipolar electrode BP₂, and separator 4 arranged between those.

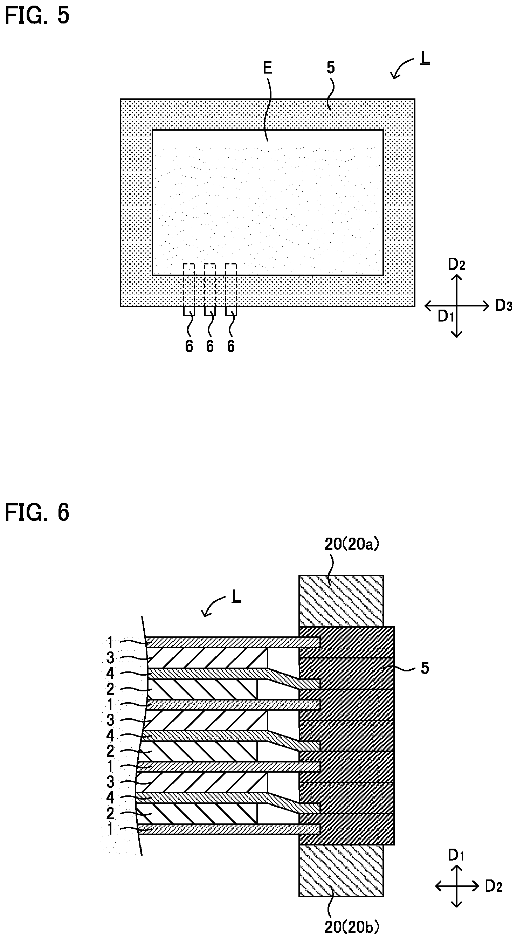

There are no particular limitations on the shape (shape in a plan view) of the layered body when viewed from the first direction, and examples thereof may include a square shape such as a foursquare shape and a rectangular shape. For example, the shape of the layered body L in a plan view shown in FIG. 5 is a square shape. The length of each side configuring the shape of the layered body in a plan view is not particularly limited, but for example, it is respectively 30 cm or more, may be 50 cm or more, and may be 100 cm or more. Meanwhile, the length of each side is, for example, respectively 200 cm or less. The control of the sealability is more difficult when the scale of the layered body is larger. In the present disclosure, even when the layered body is large-scaled, a storage module with excellent sealability can be obtained by using the restraining member with low heat conductivity and heating the frame body and the restraining member.

As shown in FIG. 5, the layered body L may include nest 6. One end part of the nest 6 is present inside the layered body L (in a space of the power generating unit), and the other end part of the nest 6 is present outside the layered body L. Also, the nest 6 is arranged so as to extend to a second direction D₂ orthogonal to the first direction D₁. After the heating step to be described later, by pulling out the nest 6, a penetration hole for supplying a liquid electrolyte to each power generating unit is formed. Also, although not illustrated, the layered body may include a voltage detecting terminal that extends to the second direction D₂, for detecting the voltage of each power generating unit.

There are no particular limitations on the method for producing the layered body. As shown in FIG. 2, the anode active material layer 3 in the bipolar electrode BP₁ and the cathode active material layer 2 in the bipolar electrode BP₂ are faced to each other interposing the separator 4. On this occasion, additional frame body 5 (spacer 51) is arranged between the frame body 5 in the bipolar electrode BP₁ and the frame body 5 in the bipolar electrode BP₂. Similarly, the cathode active material layer 2 in the bipolar electrode BP₁ and the anode active material layer 3 in the anode side end electrode AN are faced to each other interposing the separator 4. On this occasion, an additional frame body 5 (spacer 51) is arranged between the frame body 5 in the bipolar electrode BP₁ and the frame body 5 in the anode side end electrode AN. Similarly, the anode active material layer 3 in the bipolar electrode BP₂ and the cathode active material layer 2 in the cathode side end electrode CA are faced to each other interposing the separator 4. On this occasion, an additional frame body 5 (spacer 51) is arranged between the frame body 5 in the bipolar electrode BP₂ and the frame body 5 in the cathode side end electrode CA. In this manner, the layered body L is obtained.

### 2. Arranging step

The arranging step in the present disclosure is a step of arranging a pair of restraining member of which heat conductivity is 1 W/m·K or less, in a position overlapping with the frame body in the layered body, in the first direction. In specific, as shown in FIG. 6, when viewed from the first direction D₁, a pair of restraining member 20 (20a, 20b) is arranged in the position overlapping with the frame body 5 in the layered body L.

The heat conductivity of the restraining member is, usually 1 W/m·K or less, may be 0.5 W/m·K less, may be 0.3 W/m·K or less, and may be 0.1 W/m·K or less. For example, when the material of the restraining member is a metal, the heat conductivity is larger than 1 W/m·K. For example, the heat conductivity of the stainless steel is 16 W/m·K, and the heat conductivity of aluminum is 236 W/m·K.

The heat conductivity of the restraining member may be lower than the heat conductivity of the frame body made of a resin. For example, when the frame body is made of polyethylene, the heat conductivity of the frame body is, for example, 0.33 W/m·K (low density PE) to 0.52 W/m·K (high density PE).

The heat resistant temperature of the restraining member is usually higher than the melting point of the frame body made of a resin. Also, the heat resistant temperature of the restraining member is higher than the heating temperature in the heating step described later. When the heat resistant temperature of the restraining member is lower than the melting point of the frame body made of a resin, or the heating temperature in the heating step, sufficient heating cannot be performed. The heat resistant temperature of the restraining member refers to a temperature with which the burnout of the restraining member is not caused. In other words, it is a temperature with which the restraining member can maintain its restraining function. For example, when the material of the restraining member is an inorganic material, its melting point can be taken as the heat resistant temperature. Also, for example, when the material of the restraining member is a resin, its deflection temperature under load can be taken as the heat resistant temperature.

The heat resistant temperature of the restraining member is, for example, 200°C or more, may be 250°C or more, and may be 350°C or more. When the heat resistant temperature of the restraining member is high, the frame body can be sufficiently heated. Also, there are no particular limitations on the upper limit of the heat resistant temperature of the restraining member.

Examples of the material for the restraining member may include an inorganic material and a resin. Examples of the inorganic material may include ceramic such as alumina and silica, glass, plaster, brick, calcium silicate, and concrete. Also, examples of the resin may include a polyphenylene sulfide (PPS) based resin, a polyether ether ketone (PEEK) based resin, a polytetrafluoroethylene (PTFE) based resin, a polyamide imide (PAI) based resin, a polyimide (PI) based resin, a polyether sulfone (PES) based resin, a polyether nitrile (PEN) based resin, a polybenzimidazole (PBI) based resin, a polyether imide (PEI) based resin, and a polyarylate (PAR) based resin.

### 3. Heating step

The heating step in the present disclosure is a step of heating the frame body in the layered body and the pair of restraining member while applying a restraining pressure to the layered body by the pair of restraining member, and thereby welding the frame body adjacent to each other in the first direction to form a seal part.

The restraining pressure to be applied to the layered body by the restraining member is not particularly limited, and for example, it is 1 kPa or more and 30 MPa or less, and may be 0.1 MPa or more and 10 MPa or less. Also, the restraining pressure can be adjusted by, for example, a clamp connected to the pair of restraining member.

In the heating step, the frame body in the layered body and the pair of restraining member are heated to weld the frame bodies adjacent to each other in the first direction. In other words, not only the frame body but also the restraining member is heated. From the view point of inhibiting the burnout of the restraining member, conventionally, the frame body was heated while avoiding the restraining member. In contrast, in the present disclosure, by using the restraining member with high heat resistant temperature, not only the frame body but also the restraining member is heated. When viewed from the second direction orthogonal to the first direction, Q₁ designates a calorific value to be applied to a unit area of the frame body, and Q₂ designates a calorific value to be applied to a unit area of the restraining member, the rate of Q₂ with respect to Q₁, which is Q₂/Q₁ is, for example, 0.3 or more, may be 0.5 or more, may be 0.7 or more, and may be 0.9 or more.

In the present disclosure, typically, heating is performed to the side surface (surface extending to the first direction) of the frame body, and the frame bodies adjacent to each other in the first direction are welded to form a seal part. The heating temperature is appropriately selected according to the material of the frame body, but for example, it is 120°C or more and 300°C or less, and may be 150°C or more and 250°C or less. Heating is performed by, for example, using a radiation superheater such as an infrared lamp heater. For example, as shown in FIG. 3, with the radiation superheater 30, the side surface SS of the frame body 5 and the pair of restraining member 20 (20a, 20b) are heated. The output of the infrared lamp per piece of lamp is, for example, 100 W or more, may be 150 W or more, and may be 300 W or more.

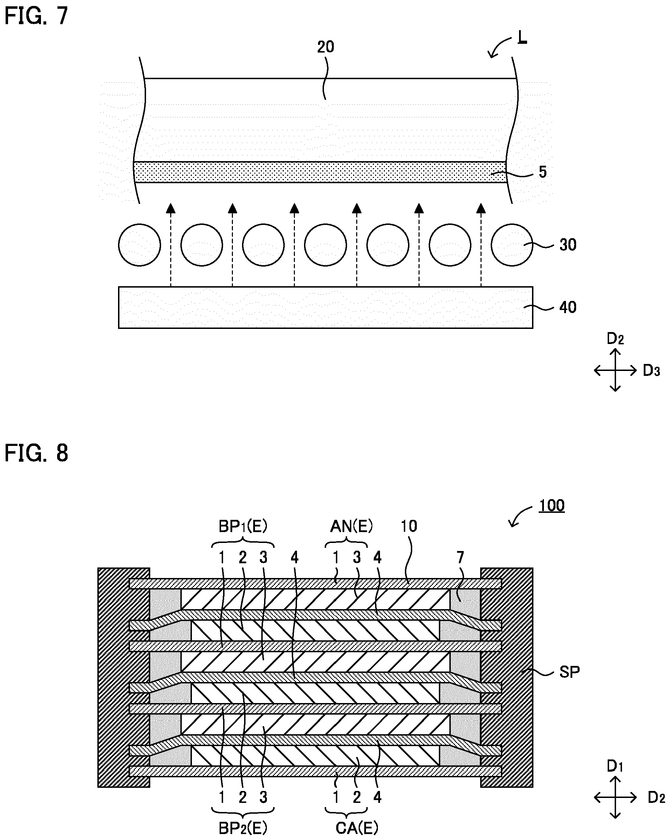

As shown in FIG. 7, on the basis of the radiation superheater 30, air blowing device 40 arranged in the opposite side to the layered body L, may be used to send air towards the layered body L. By blowing an air, for example, even when a plurality of nest protrudes in the side surface of the frame body, it is possible to prevent air from staying between the plurality of nest, which can prevent the occurrence of uneven heating. The temperature of air ejected from the air blowing device 40 may be a normal temperature, may be 50°C or more, may be 100°C or more, and may be 150°C or more.

As shown in FIG. 4B, in the second direction D₂ orthogonal to the first direction D₁, A designates the length of the seal part SP that extends from the side surface SS of the seal part SP to the electrode E side. The length A of the seal part SP can be obtained by, for example, observing the cross-section of the seal part SP. Also, A₁ designates a length of the seal part SP in one end t₁ of the seal part SP in the first direction D₁, A₂ designates a length of the seal part SP in the other end t₂ of the seal part SP in the first direction D₁, and A₃ designates a length of the seal part SP in center c of the seal part SP in the first direction D₁. As shown in FIG. 4B, the A₁ and the A₂ are preferably larger than the A₃.

The rate of the A₁ with respect to the A₃, which is A₁/A₃ is, for example, 1.05 or more, may be 1.2 or more, and may be 1.5 or more. Similarly, the rate of the A₂ with respect to the A₃, which is A₂/A₃ is, for example, 1.05 or more, may be 1.2 or more, and may be 1.5 or more. Also, as shown in FIG. 4B, the side surface α of the electrode E side in the seal part SP may be a curved shape in which the outside of the electrode E (opposite side to the center of the electrode E) is a convex.

### 4. Other steps

As shown in FIG. 5, when the layered body L includes the nest 6, the method for producing the storage module in the present disclosure may include a penetration hole forming step of forming a penetration hole by removing the nest 6 from the layered body L after the above described heating step.

The method for producing the storage module in the present disclosure may include a liquid electrolyte supplying step of supplying a liquid electrolyte inside the layered body via the penetration hole after the above described penetration hole forming step. There are no particular limitations on the method for supplying the liquid electrolyte, and conventionally known method may be used.

The method for producing the storage module in the present disclosure may include a sealing step of sealing the penetration hole after the above described liquid electrolyte supplying step. There are no particular limitations on the method for sealing the penetration hole, and examples thereof may include a method of sealing the penetration hole with a film.

### 5. Storage module

Specific examples of the storage module in the present disclosure may include a secondary battery (such as a lithium ion secondary battery) and an electric double layered capacitor. Also, examples of the applications of the storage module may include a power source for vehicles such as hybrid electric vehicles (HEV), plug-in hybrid electric vehicles (PHEV), battery electric vehicles (BEV), gasoline-fueled automobiles and diesel powered automobiles. In particular, it is preferably used as a power source for driving hybrid electric vehicles (HEV), plug-in hybrid electric vehicles (PHEV), and battery electric vehicles (BEV). Also, the storage module in the present disclosure may be used as a power source for moving bodies other than vehicles (such as rail road transportation, vessel and airplane), and may be used as a power source for electronic products such as information processing equipment.

### B. Storage module

FIG. 8 is a schematic cross-sectional view exemplifying the storage module in the present disclosure. Storage module 100 shown in FIG. 8 includes: electrode body 10 in which a plurality of electrode E is layered in a first direction D₁; and seal part SP made of a resin arranged along an outer periphery of the electrode body 10. Also, the inside of the electrode body 10 sealed with the seal part SP is filled with liquid electrolyte 7. Also, as shown in FIG. 4B, in the second direction D₂ orthogonal to the first direction D₁, A designates the length of the seal part SP that extends from the side surface SS of the seal part SP to the electrode E side. Also, A₁ designates the length of the seal part SP in one end t₁ of the seal part SP in the first direction D₁, A₂ designates the length of the seal part SP in the other end t₂ of the seal part SP in the first direction D₁, and A₃ designates the length of the seal part SP in the center c of the seal part SP in the first direction D₁. As shown in FIG. 4B, the A₁ and the A₂ are larger than the A₃.

According to the present disclosure, the A₁ and the A₂ are larger than the A₃, and thus the storage module may have excellent sealability and durability. The storage module in the present disclosure is in the same contents as those described in "A. Method for producing storage module" above; thus, the descriptions herein are omitted.

The present disclosure is not limited to the embodiments. The embodiments are exemplification, and any other variations are intended to be included in the technical scope of the present disclosure if they have substantially the same constitution as the technical idea described in the claims of the present disclosure and have similar operation and effect thereto.

### Reference Sings List

- 1: current collector
- 2: cathode active material layer
- 3: anode active material layer
- 4: separator
- 5: frame body
- 10: electrode body
- 20: restraining member
- 30: radiation superheater
- 100: storage module

## Claims

1. A method for producing a storage module, the method **characterized by** comprising:
a preparing step of preparing a layered body, in which a plurality of electrode sheet that includes: an electrode including a current collector and an active material layer; and a frame body made of a resin arranged along an outer periphery of the electrode, is layered in a first direction;
an arranging step of arranging a pair of restraining member of which heat conductivity is 1 W/m·K or less, in a position overlapping with the frame body in the layered body when viewed from the first direction; and
a heating step of heating the frame body in the layered body and the pair of restraining member while applying a restraining pressure to the layered body by the pair of restraining member, and thereby welding the frame body adjacent to each other in the first direction to form a seal part.

2. The method for producing a storage module according to claim 1, **characterized in that** a heat resistant temperature of the restraining member is 200°C or more.

3. The method for producing a storage module according to claim 1, **characterized in that** the heat conductivity of the restraining member is 0.1 W/m·K or less.

4. The method for producing a storage module according to claim 1, **characterized in that** a material of the restraining member is an inorganic material.

5. The method for producing a storage module according to claim 1, **characterized in that** a material of the restraining member is a resin.

6. The method for producing a storage module according to claim 1, **characterized in that**, in the heating step, the seal part in the layered body and the pair of restraining member are heated by a radiation superheater.

7. The method for producing a storage module according to claim 6, **characterized in that** the radiation superheater is an infrared lamp heater.

8. The method for producing a storage module according to claim 1, **characterized in that** a shape of the layered body viewed from the first direction is a square, and a length of each side configuring the square is 30 cm or more.

9. A storage module **characterized by** comprising:
an electrode body in which a plurality of electrode including a current collector and an active material layer is layered in a first direction; and
a seal part made of a resin arranged along an outer periphery of the electrode body, wherein
in a second direction orthogonal to the first direction, when A designates a length of the seal part extending from a side surface of the seal part to the electrode side, A₁ designates a length of the seal part in one end of the seal part in the first direction, A₂ designates a length of the seal part in the other end of the seal part in the first direction, and A₃ designates a length of the seal part in a center of the seal part in the first direction, the A₁ and the A₂ are larger than the A₃.
